# EUROPEAN PATENT APPLICATION

(11) **EP 3 711 581 A1**
(43) Date of publication of application: **23.09.2020**
(21) Application number: 19020218.4
(22) Date of filing: 22.03.2019
(51) Int. Cl.: A24F 47/00, H02J 7/00

(54) **DOCK FOR A SMOKING SUBSTITUTE DEVICE**

(71) Applicant: NERUDIA LIMITED, Liverpool Merseyside L24 9HP (GB)
(72) Inventor: FERRIE, Kate, Liverpool L24 9HP (GB); SHENTON, Ross, Liverpool L24 9HP (GB); MURRAY, Samantha, Liverpool L24 9HP (GB); LORD, Chris, Liverpool L24 9HP (GB); SUDLOW, Tom, Liverpool L24 9HP (GB); MARCHBANK, Jonathan, Liverpool L24 9HP (GB)
(74) Representative: Mewburn Ellis LLP

(57) **Abstract**

A dock for a smoking substitute device, comprising: a cavity for receiving the smoking substitute device; and a closure configured to close the cavity and to support a cable for the dock.

## Description

### TECHNICAL FIELD

The present invention relates to a smoking substitute system and particularly, although not exclusively, to a smoking substitute system comprising a smoking substitute device and a dock for the smoking system.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful by-products. There have been proposed various smoking substitute systems (or "substitute smoking systems") in order to avoid the smoking of tobacco.

Such smoking substitute systems can form part of nicotine replacement therapies aimed at people who wish to stop smoking and overcome a dependence on nicotine.

Smoking substitute systems include electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute systems are intended to provide a substitute for the rituals of smoking, whilst providing the user with a similar experience and satisfaction to those experienced with traditional smoking and with combustible tobacco products. Some smoking substitute systems use smoking substitute articles (also referred to as a "consumables") that are designed to resemble a traditional cigarette and are cylindrical in form with a mouthpiece at one end.

The popularity and use of smoking substitute systems has grown rapidly in the past few years. Although originally marketed as an aid to assist habitual smokers wishing to quit tobacco smoking, consumers are increasingly viewing smoking substitute systems as desirable lifestyle accessories.

There are a number of different categories of smoking substitute systems, each utilising a different smoking substitute approach.

One approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

Smoking substitute device typically comprises a power source, for example a rechargeable battery. Such rechargeable battery may hold enough charge for heating a plurality of consumables through multiple sessions. In some cases, the device comprises a more compact battery which only holds enough charge for consuming a single consumable, and therefore such device may be supplemented by a charger case to charge the battery between each session. Either way, HT devices currently available require the user to plug in a power cable at a charging port of the device or the charger case. This may be inconvenient, and may even be difficult for some users.

There may be a need for improved design of the dock for a smoking substitute systems to enhance the user experience. The present disclosure has been devised in the light of the above considerations.

### SUMMARY OF THE INVENTION

A charging dock may provide a cavity for receiving the device and a power socket for connecting with a power cable. Such dock may be placed at a permanent location, such as on top of a bedside cabinet. In such arrangement, the power cable may be hidden from sight e.g. with an external cable management or permanent fixings such as cable trunkings. It is preferable for the dock to be mobile. However, the electrical terminals within the cavity may be easily damaged during transit, e.g. by other loose items in a suitcase. Therefore, an on-board cable management may be provided to securely connect with the power cable.

At its most general, the present invention relates to a dock for a smoking substitute device. The dock is configured to shield a cavity of the dock when dock is not in user, as well as to support a cable for the dock.

According to a first aspect of the present invention, there is provided a dock for a smoking substitute device, comprising: a cavity for receiving the smoking substitute device; and a closure configured to close the cavity and to support a cable for the dock.

The dock may be provided for charging a rechargeable battery of the smoking substitute device.

The cable may be configured to connect to a power supply electrical terminal of the dock, as such to supply electrical power to the device via a dock electrical terminal at the dock. That is, the dock electrical terminal is in electrical connection with the power supply electrical terminal.

Alternatively, the cable may be received in the dock and may directly connect to the device when the device is received in the cavity of the dock. That is, an end of the cable forms a dock electrical terminal connectable with a device electrical terminal of the smoking substitute device.

The dock may or may not comprise a rechargeable battery. The dock may comprise a plurality of cavity each configured to receive and charge a smoking substitute device or other electrical devices.

By providing the dock comprising a closure, the cavity of the dock may be selectively closed when the smoking substitute device is not positioned in the dock. Advantageously, this may allow the cavity, as well as a device electrical terminal in the cavity to be shield from environment. For example, the device electrical terminal may be protected from physical damage, as well as dust and dirt ingress. Said closure may also act as a support for a cable of the dock, when the device is received by the dock for charging. Advantageously, the cable may be better supported by the closure and thereby it may provide a more secured and stable connection with the device or the dock.

The term "closure" is intended to refer to a cover member or a plug, which may be used for closing the cavity of the dock.

Optional features will now be set out. These are applicable singly or in any combination with any aspect.

Optionally, the cavity may comprise a device electrical terminal, and the cable may be configured to supply electrical power to the device electrical terminal.

Optionally, the smoking substitute device is a Heat Not Burn (HNB) device.

Optionally, the closure is hingedly attached to the dock. For example, the closure may be pivotally attached to the dock such that it is pivotable relative to the dock. This may advantageously allow the closure to remain attached to the dock when it is not closing the cavity.

Optionally, the closure is configured to pivot between a first position and a second position, wherein in the first position the closure closes the cavity and in the second position the closure is removed from the cavity and supports the cable. Advantageously, this may allow the dock to perform the two crucial functions each appropriate for one of the two positions. For example, when the dock is in use with the device received in the cavity, the closure that is removed from the cavity may form a support for the cable. When the dock is not in use and the device is removed from the cavity, the cable may be unplug from the dock, or from the device, with the closure closing and shielding the cavity.

Optionally, the closure is configured to fill the cavity as it closes the cavity. The closure may have an external profile that matches a void of the cavity. Advantageously, this may reduce relative movement between the closure and the dock during transit, as well as preventing loose items from being trapped in the cavity.

Optionally, the closure closes the cavity by one of more of interference fit or a snap fit engagement. Advantageously, this may allow the closure to be secured in the first position. Alternatively, the closure may comprise other mechanism for securing the closure in the cavity, such as a toggle or a button activated catch.

Optionally, the closure comprises a groove for receiving and supporting the one cable. The groove may receive and retain the cable therein by an interference fit. Advantageously, this may allow the cable to fit securely fit onto the closure, without it being protruded from a surface of the closure. For example, the groove in the closure may rigidly support the cable of dock, and may reduce movement of the cable during the charging of the device in the dock.

Optionally, the groove is arranged to separate from an electrical terminal at a distance ranging from 6 cm to 12 cm. Preferably, the groove is arranged to separate from an electrical terminal at a distance ranging from 8 cm to 10 cm. The electrical terminal may be a device electrical terminal on the device or a dock electrical terminal of the dock. Advantageously, this may allow a more secure electrical connection.

Optionally, the closure comprises a grip for removing the closure from the cavity. The grip may comprises one or more of a recess and an embossment formed on the surface of the closure. Advantageously, the grip may provide the user with better grip when pivoting the closure between the first position and the second position.

Optionally, the closure is formed from an elastic material. For example, said elastic material may be an elastomer such as silicone and rubber. Advantageously, it may allow the closure to form an interference fit with the cavity and thereby it may help securing the closure in place.

Optionally, the cavity comprises a dock electrical terminal for forming an electrical connection with a device electrical terminal on the smoking substitute device when said smoking substitute device is received in the cavity.

Optionally, the dock further comprises a base, wherein the base comprises a non-slip coating. For example an elastomer such as silicone and rubber. Advantageously, such arrangement may reduce the movement in the dock when it receives and charges the device.

The device may comprise an elongate body. An end of the elongate body may be configured for engagement with an aerosol-forming article. For example, the body may be configured for engagement with a heated tobacco (HT) consumable (or heat-not-burn (HNB) consumable) or an e-cigarette consumable. The terms "heated tobacco" and "heat-not-burn" are used interchangeably herein to describe a consumable that is of the type that is heated rather than combusted (or are used interchangeably to describe a device for use with such a consumable). The device may comprise a cavity that is configured for receipt of at least a portion of the consumable (i.e. for engagement with the consumable). The aerosol-forming article may be of the type that comprises an aerosol former (e.g. carried by an aerosol-forming substrate).

The device may comprise a heater for heating the aerosol-forming article. The heater may comprise a heating element, which may be in the form of a rod that extends from the body of the device. The heating element may extend from the end of the body that is configured for engagement with the aerosol-forming article.

The heater (and thus the heating element) may be rigidly mounted to the body. The heating element may be elongate so as to define a longitudinal axis and may, for example, have a transverse profile (i.e. transverse to a longitudinal axis of the heating element) that is substantially circular (i.e. the heating element may be generally cylindrical). Alternatively, the heating element may have a transverse profile that is rectangular (i.e. the heater may be a "blade heater"). The heating element may alternatively be in the shape of a tube (i.e. the heater may be a "tube heater"). The heating element may take other forms (e.g. the heating element may have an elliptical transverse profile). The shape and/or size (e.g. diameter) of the transverse profile of the heating element may be generally consistent for the entire length (or substantially the entire length) of the heating element.

The heating element may be between 15 mm and 25 mm long, e.g. between 18 mm and 20 mm long, e.g. around 19 mm long. The heating element may have a diameter of between 1.5 mm and 2.5 mm, e.g. a diameter between 2 mm and 2.3 mm, e.g. a diameter of around 2.15 mm.

The heating element may be formed of ceramic. The heating element may comprise a core (e.g. a ceramic core) comprising Al2O3. The core of the heating element may have a diameter of 1.8 mm to 2.1 mm, e.g. between 1.9 mm and 2 mm. The heating element may comprise an outer layer (e.g. an outer ceramic layer) comprising Al2O3. The thickness of the outer layer may be between 160 µm and 220 µm, e.g. between 170 µm and 190 µm, e.g. around 180 µm. The heating element may comprise a heating track, which may extend longitudinally along the heating element. The heating track may be sandwiched between the outer layer and the core of the heating element. The heating track may comprise tungsten and/or rhenium. The heating track may have a thickness of around 20 µm.

The heating element may be located in the cavity (of the device), and may extend (e.g. along a longitudinal axis) from an internal base of the cavity towards an opening of the cavity. The length of the heating element (i.e. along the longitudinal axis of the heater) may be less than the depth of the cavity. Hence, the heating element may extend for only a portion of the length of the cavity. That is, the heating element may not extend through (or beyond) the opening of the cavity.

The heating element may be configured for insertion into an aerosol-forming article (e.g. a HT consumable) when an aerosol-forming article is received in the cavity. In that respect, a distal end (i.e. distal from a base of the heating element where it is mounted to the device) of the heating element may comprise a tapered portion, which may facilitate insertion of the heating element into the aerosol-forming article. The heating element may fully penetrate an aerosol-forming article when the aerosol-forming article is received in the cavity. That is, the entire length, or substantially the entire length, of the heating element may be received in the aerosol-forming article.

The heating element may have a length that is less than, or substantially the same as, an axial length of an aerosol-forming substrate forming part of an aerosol-forming article (e.g. a HT consumable). Thus, when such an aerosol-forming article is engaged with the device, the heating element may only penetrate the aerosol-forming substrate, rather than other components of the aerosol-forming article. The heating element may penetrate the aerosol-forming substrate for substantially the entire axial length of the aerosol forming-substrate of the aerosol-forming article. Thus, heat may be transferred from (e.g. an outer circumferential surface of) the heating element to the surrounding aerosol-forming substrate, when penetrated by the heating element. That is, heat may be transferred radially outwardly (in the case of a cylindrical heating element) or e.g. radially inwardly (in the case of a tube heater).

Where the heater is a tube heater, the heating element of the tube heater may surround at least a portion of the cavity. When the portion of the aerosol-forming article is received in the cavity, the heating element may surround a portion of the aerosol-forming article (i.e. so as to heat that portion of the aerosol-forming article). In particular, the heating element may surround an aerosol forming substrate of the aerosol-forming article. That is, when an aerosol-forming article is engaged with the device, the aerosol forming substrate of the aerosol-forming article may be located adjacent an inner surface of the (tubular) heating element. When the heating element is activated, heat may be transferred radially inwardly from the inner surface of the heating element to heat the aerosol forming substrate.

The cavity may comprise a (e.g. circumferential) wall (or walls) and the (tubular) heating element may extend around at least a portion of the wall(s). In this way, the wall may be located between the inner surface of the heating element and an outer surface of the aerosol-forming article. The wall (or walls) of the cavity may be formed from a thermally conductive material (e.g. a metal) to allow heat conduction from the heating element to the aerosol-forming article. Thus, heat may be conducted from the heating element, through the cavity wall (or walls), to the aerosol-forming substrate of an aerosol-forming article received in the cavity.

In some embodiments the heater may form part of an aerosol-forming article for use with the device. In such cases the device may not comprise a heater. Rather, the aerosol-forming article may comprise a heater. Such arrangements may, for example, be suited to e-cigarette systems in which the aerosol-forming article comprises a tank containing an aerosol former (e.g. in liquid form). In such embodiments, the device may comprise means for connecting the device the heater of an aerosol-forming article engaged with the device. For example, the device may comprise one or more device connectors for (e.g. electrically) connecting the device to a corresponding heater connector of the aerosol-forming article. The connectors (i.e. of both the device and the aerosol-forming article) may be in the form of electrically conductive elements (e.g. plates) that contact when the aerosol-forming article is engaged with the device.

In some embodiments the device may comprise a cap disposed at the end of the body that is configured for engagement with an aerosol-forming article. Where the device comprises a heater having a heating element, the cap may at least partially enclose the heating element. The cap may be moveable between an open position in which access is provided to the heating element, and a closed position in which the cap at least partially encloses the heating element. The cap may be slideably engaged with the body of the device, and may be slideable between the open and closed positions.

The cap may define at least a portion of the cavity of the device. That is, the cavity may be fully defined by the cap, or each of the cap and body may define a portion of the cavity. Where the cap fully defines the cavity, the cap may comprise an aperture for receipt of the heating element into the cavity (when the cap is in the closed position). The cap may comprise an opening to the cavity. The opening may be configured for receipt of at least a portion of an aerosol-forming article. That is, an aerosol-forming article may be inserted through the opening and into the cavity (so as to be engaged with the device).

The cap may be configured such that when an aerosol-forming article is engaged with the device (e.g. received in the cavity), only a portion of the aerosol-forming article is received in the cavity. That is, a portion of the aerosol-forming article (not received in the cavity) may protrude from (i.e. extend beyond) the opening. This (protruding) portion of the aerosol-forming article may be a terminal (e.g. mouth) end of the aerosol-forming article, which may be received in a user's mouth for the purpose of inhaling aerosol formed by the device.

The device may comprise a power source or may be connectable to a power source (e.g. a power source separate to the device). The power source may be electrically connectable to the heater. In that respect, altering (e.g. toggling) the electrical connection of the power source to the heater may affect a state of the heater. For example, toggling the electrical connection of the power source to the heater may toggle the heater between an on state and an off state. The power source may be a power store. For example, the power source may be a battery or rechargeable battery (e.g. a lithium ion battery).

The device may comprise an input connection or a device electrical terminal (e.g. a USB port, Micro USB port, USB-C port, etc.). The input connection may be configured for connection to an external source of electrical power, such as a mains electrical supply outlet. The input connection or a device electrical terminal may, in some cases, be used as a substitute for an internal power source (e.g. battery or rechargeable battery). That is, the input connection may be electrically connectable to the heater (for providing power to the heater). Hence, in some forms, the input connection may form at least part of the power source of the device.

Where the power source comprises a rechargeable power source (such as a rechargeable battery), the input connection may be used to charge and recharge the power source.

The device may comprise a user interface (UI). In some embodiments the UI may include input means to receive operative commands from the user. The input means of the UI may allow the user to control at least one aspect of the operation of the device. In some embodiments the input means may comprise a power button to switch the device between an on state and an off state.

In some embodiments the UI may additionally or alternatively comprise output means to convey information to the user. In some embodiments the output means may comprise a light to indicate a condition of the device (and/or the aerosol-forming article) to the user. The condition of the device (and/or aerosol-forming article) indicated to the user may comprise a condition indicative of the operation of the heater. For example, the condition may comprise whether the heater is in an off state or an on state. In some embodiments, the UI unit may comprise at least one of a button, a display, a touchscreen, a switch, a light, and the like. For example, the output means may comprise one or more (e.g. two, three, four, etc.) light-emitting diodes ("LEDs") that may be located on the body of the device.

The device may further comprise a puff sensor (e.g. airflow sensor), which form part of the input means of the UI. The puff sensor may be configured to detect a user drawing on an end (i.e. a terminal (mouth) end) of the aerosol-forming article. The puff sensor may, for example, be a pressure sensor or a microphone. The puff sensor may be configured to produce a signal indicative of a puff state. The signal may be indicative of the user drawing (an aerosol from the aerosol-forming article) such that it is e.g. in the form of a binary signal. Alternatively or additionally, the signal may be indicative of a characteristic of the draw (e.g. a flow rate of the draw, length of time of the draw, etc).

The device may comprise a controller, or may be connectable to a controller that may be configured to control at least one function of the device. The controller may comprise a microcontroller that may e.g. be mounted on a printed circuit board (PCB). The controller may also comprise a memory, e.g. non-volatile memory. The memory may include instructions, which, when implemented, may cause the controller to perform certain tasks or steps of a method. Where the device comprises an input connection, the controller may be connected to the input connection.

The controller may be configured to control the operation of the heater (and e.g. the heating element). Thus, the controller may be configured to control vaporisation of an aerosol forming part of an aerosol-forming article engaged with the device. The controller may be configured to control the voltage applied by power source to the heater. For example, the controller may be configured to toggle between applying a full output voltage (of the power source) to the heater and applying no voltage to the heater. Alternatively or additionally, the control unit may implement a more complex heater control protocol.

The device may further comprise a voltage regulator to regulate the output voltage supplied by the power source to form a regulated voltage. The regulated voltage may subsequently be applied to the heater.

In some embodiments, where the device comprises a UI, the controller may be operatively connected to one or more components of the UI. The controller may be configured to receive command signals from an input means of the UI. The controller may be configured to control the heater in response to the command signals. For example, the controller may be configured to receive "on" and "off command signals from the UI and, in response, may control the heater so as to be in a corresponding on or off state.

The controller may be configured to send output signals to a component of the UI. The UI may be configured to convey information to a user, via an output means, in response to such output signals (received from the controller). For example, where the device comprises one or more LEDs, the LEDs may be operatively connected to the controller. Hence, the controller may configured to control the illumination of the LEDs (e.g. in response to an output signal). For example, the controller may be configured to control the illumination of the LEDs according to (e.g. an on or off) state of the heater.

Where the device comprises a sensor (e.g. a puff/airflow sensor), the controller may be operatively connected to the sensor. The controller may be configured to receive a signal from the sensor (e.g. indicative of a condition of the device and/or engaged aerosol-forming article). The controller may be configured to control the heater, or an aspect of the output means, based on the signal from the sensor.

The device may comprise a wireless interface configured to communicate wirelessly (e.g. via Bluetooth (e.g. a Bluetooth low-energy connection) or WiFi) with an external device. Similarly, the input connection may be configured for wired connection to an external device so as to provide communication between the device and the external device.

The external device may be a mobile device. For example, the external device may be a smart phone, tablet, smart watch, or smart car. An application (e.g. app) may be installed on the external device (e.g. mobile device). The application may facilitate communication between the device and the external device via the wired or wireless connection.

The wireless or wired interface may be configured to transfer signals between the external device and the controller of the device. In this respect, the controller may control an aspect of the device in response to a signal received from an external device. Alternatively or additionally, an external device may respond to a signal received from the device (e.g. from the controller of the device).

In a second aspect, there is provided a system (e.g. a smoking substitute system) comprising a dock according to the first aspect, and a smoking substitute device configured to be received in the cavity of the dock. Optionally, the smoking substitute device further comprises a device electrical terminal; wherein said device electrical terminal is configured to form an electrical connection with a dock electrical terminal at the dock when said smoking substitute device is received in the cavity.

Optionally, the system comprises an aerosol -forming article for use with the smoking substitute device. The aerosol-forming article may comprise an aerosol-forming substrate at an upstream end of the aerosol-forming article. The article may be in the form of a smoking substitute article, e.g. heated tobacco (HT) consumable (also known as a heat-not-burn (HNB) consumable).

As used herein, the terms "upstream" and "downstream" are intended to refer to the flow direction of the vapour/aerosol i.e. with the downstream end of the article/consumable being the mouth end or outlet where the aerosol exits the consumable for inhalation by the user. The upstream end of the article/consumable is the opposing end to the downstream end.

The aerosol-forming substrate is capable of being heated to release at least one volatile compound that can form an aerosol. The aerosol-forming substrate may be located at the upstream end of the article/consumable.

The system may include a smoking substitute device which may include a body with a device electrical terminal. Further, the system may include the dock, as provided in the first aspect, which may be adapted for rigidly supporting the device for charging. The dock may further include the cavity and the dock electrical terminal provided in the cavity. The dock is configured to receive the body to establish electrical communication between the device electrical terminal and the dock electrical terminal.

Advantageously, the cavity in the dock is configured to receive the body of the smoking substitute device in at least one or more orientations. For example, the device may be received in the dock with either a front surface or a back surface facing forward.

In order to generate an aerosol, the aerosol-forming substrate comprises at least one volatile compound that is intended to be vaporised/aerosolised and that may provide the user with a recreational and/or medicinal effect when inhaled. Suitable chemical and/or physiologically active volatile compounds include the group consisting of: nicotine, cocaine, caffeine, opiates and opoids, cathine and cathinone, kavalactones, mysticin, beta-carboline alkaloids, salvinorin A together with any combinations, functional equivalents to, and/or synthetic alternatives of the foregoing.

The aerosol-forming substrate may comprise plant material. The plant material may comprise least one plant material selected from the list including *Amaranthus dubius*, *Arctostaphylos uva-ursi* (Bearberry), *Argemone mexicana*, *Amica*, *Artemisia vulgaris*, Yellow Tees, *Galea zacatechichi*, *Canavalia maritima* (Baybean), *Cecropia mexicana* (Guamura), *Cestrum noctumum*, *Cynoglossum virginianum* (wild comfrey), *Cytisus scoparius*, *Damiana*, *Entada rheedii*, *Eschscholzia califomica* (California Poppy), *Fittonia albivenis*, *Hippobroma longiflora*, *Humulus japonica* (Japanese Hops), *Humulus lupulus* (Hops), *Lactuca virosa* (Lettuce Opium), *Laggera alata*, *Leonotis leonurus*, *Leonurus cardiaca* (Motherwort), *Leonurus sibiricus* (Honeyweed), *Lobelia cardinalis, Lobelia inflata* (Indian-tobacco), *Lobelia siphilitica, Nepeta cataria* (Catnip), *Nicotiana species* (Tobacco), *Nymphaea alba* (White Lily), *Nymphaea caerulea* (Blue Lily), Opium poppy, *Passiflora incamata* (Passionflower), *Pedicularis densiflora* (Indian Warrior), *Pedicularis groenlandica* (Elephant's Head), *Salvia divinorum, Salvia dorrii* (Tobacco Sage), Salvia species (Sage), *Scutellaria galericulata, Scutellaria lateriflora, Scutellaria nana, Scutellaria* species (Skullcap), *Sida acuta* (Wireweed), *Sida rhombifolia, Silene capensis, Syzygium aromaticum* (Clove), *Tagetes lucida* (Mexican Tarragon), *Tarchonanthus camphoratus, Tumera diffusa* (Damiana), *Verbascum* (Mullein), *Zamia latifolia* (Maconha Brava) together with any combinations, functional equivalents to, and/or synthetic alternatives of the foregoing.

The plant material may be tobacco. Any type of tobacco may be used. This includes, but is not limited to, flue-cured tobacco, burley tobacco, Maryland Tobacco, dark-air cured tobacco, oriental tobacco, dark-fired tobacco, perique tobacco and rustica tobacco. This also includes blends of the above mentioned tobaccos.

The tobacco may comprise one or more of leaf tobacco, stem tobacco, tobacco powder, tobacco dust, tobacco derivatives, expanded tobacco, homogenised tobacco, shredded tobacco, extruded tobacco, cut rag tobacco and/or reconstituted tobacco (e.g. slurry recon or paper recon).

The aerosol-forming substrate may comprise a gathered sheet of homogenised (e.g. paper/slurry recon) tobacco or gathered shreds/strips formed from such a sheet.

The aerosol-forming substrate may comprise one or more additives selected from humectants, flavourants, fillers, aqueous/non-aqueous solvents and binders.

The flavourant may be provided in solid or liquid form. It may include menthol, liquorice, chocolate, fruit flavour (including e.g. citrus, cherry etc.), vanilla, spice (e.g. ginger, cinnamon) and tobacco flavour. The flavourant may be evenly dispersed throughout the aerosol-forming substrate or may be provided in isolated locations and/or varying concentrations throughout the aerosol-forming substrate.

The aerosol-forming substrate may be formed in a substantially cylindrical shape such that the article/consumable resembles a conventional cigarette. It may have a diameter of between 5 and 10mm e.g. between 6 and 9mm or 6 and 8mm e.g. around 7 mm. It may have an axial length of between 10 and 15mm e.g. between 11 and 14mm such as around 12 or 13mm.

The article/consumable may comprise at least one filter element. There may be a terminal filter element at the downstream/mouth end of the article/consumable.

The or at least one of the filter element(s) (e.g. the terminal filter element) may be comprised of cellulose acetate or polypropylene tow. The at least one filter element (e.g. the terminal filter element) may be comprised of activated charcoal. The at least one filter element (e.g. the terminal element) may be comprised of paper. The or each filter element may be at least partly (e.g. entirely) circumscribed with a plug wrap e.g. a paper plug wrap.

The terminal filter element (at the downstream end of the article/consumable) may be joined to the upstream elements forming the article/consumable by a circumscribing tipping layer e.g. a tipping paper layer. The tipping paper may have an axial length longer than the axial length of the terminal filter element such that the tipping paper completely circumscribes the terminal filter element plus the wrapping layer surrounding any adjacent upstream element.

In some embodiments, the article/consumable may comprise an aerosol-cooling element which is adapted to cool the aerosol generated from the aerosol-forming substrate (by heat exchange) before being inhaled by the user.

The article/consumable may comprise a spacer element that defines a space or cavity between the aerosol-forming substrate and the downstream end of the consumable. The spacer element may comprise a cardboard tube. The spacer element may be circumscribed by the (paper) wrapping layer.

In some embodiments the system may be in the form of an e-cigarette system (i.e. rather than a heated tobacco system as described above). In such a system, the consumable may be in the form of an e-cigarette consumable. The e-cigarette system may be configured such that the consumable can be received and retained in the cavity of the device (i.e. so as to be engaged with the device). The consumable may be retained by way of e.g. an interference fit, screwing one onto (or onto) the other, a bayonet fitting, or by way of a snap engagement mechanism.

The consumable may comprise a tank, which may define a reservoir for the storage of an aerosol former. The aerosol former may be in the form of an e-liquid (stored in the reservoir).

The consumable may be a "single-use" consumable. That is, upon exhausting the e-liquid in the tank, the intention may be that the user disposes of the entire consumable. Alternatively, the e-liquid may be the only part of the system that is truly "single-use". For example, the tank may be refillable with e-liquid or another component of the system (internal to the device or external to the device e.g. a refillable cartomizer) may define a reservoir for the e-liquid.

As set forth above, the consumable may comprise a heater (i.e. instead of the heater forming part of the device) configured to heat and vaporise the e-liquid. The consumable may comprise a porous wick that conveys e-liquid from the tank to a heating element of the heater. The heating element may be a heating filament that is wound (e.g. helically) around at least a portion of the porous wick, such that when the heating element is heated (e.g. by the action of electrical current passing through the heating element), heat may be transferred from the heating element to the e-liquid conveyed by the wick. This transfer of heat may vaporise the e-liquid and the resultant vapour may be entrained in an airflow passing through the consumable.

The consumable may further comprise one or more heater connectors for connecting the heater (of the consumable) to the device. The heater connectors may be in the form of electrically conductive element or contacts (e.g. metal plates) and may be disposed on an in-use device-facing surface of the consumable. The heater connectors may be electrically connected to the heater of the consumable, such that electricity supplied via the heater connectors may pass to the heater. In other words, a voltage applied across the heater connectors may generally correspond to a voltage applied across the heating element of the heater.

The heater connectors may be arranged such that they contact corresponding device connectors of the device when the consumable is engaged with the device. The device connectors may be connected (e.g. electrically) to a power source (e.g. battery) of the device. Thus, electricity may be supplied from the power source to the heating element, via in-contact heater and device connectors. In this way, the heater forming part of the consumable may operate (and interact with e.g. a controller) as otherwise described above with respect to a heater forming part of the device.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### SUMMARY OF THE FIGURES

So that the invention may be understood, and so that further aspects and features thereof may be appreciated, embodiments illustrating the principles of the invention will now be discussed in further detail with reference to the accompanying figures, in which:
Figure 1A is a schematic of a smoking substitute system;
Figure 1B is a schematic of a variation of the smoking substitute system of Figure 1A;
Figure 2A is a front view of a first embodiment of a smoking substitute system with the consumable engaged with the device;
Figure 2B is a front view of the first embodiment of the smoking substitute system with the consumable disengaged from the device;
Figure 2C is a section view of the consumable of the first embodiment of the smoking substitute system;
Figure 2D is a detailed view of an end of the device of the first embodiment of the smoking substitute system;
Figure 2E is a section view of the first embodiment of the smoking substitute system;
Figure 3A is a front view of a second embodiment of a smoking substitute system with the consumable engaged with the device;
Figure 3B is a front view of the second embodiment of the smoking substitute system with the consumable disengaged from the device;
Figure 4A is a perspective view of a dock for a HNB device, with the closure in the second position;
Figure 4B is a perspective view of a front view of a dock for the dock for the HNB device, with the closure in the first position; and
Figure 5 is a perspective view of the HNB device and a dock in engaged condition.

### DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

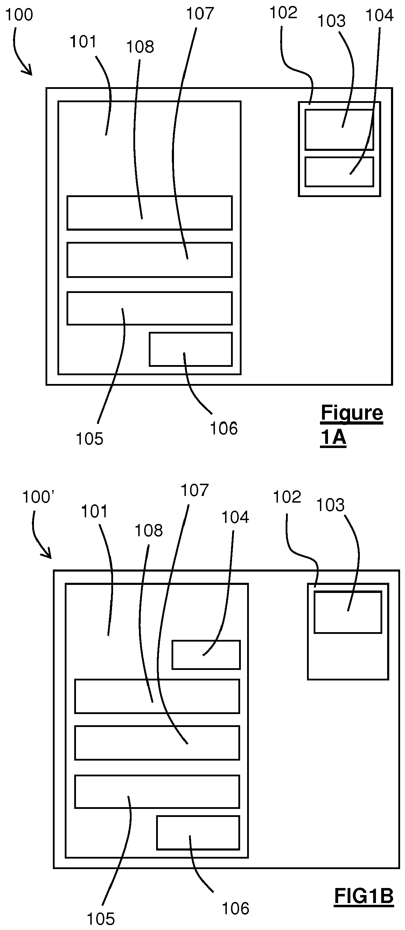

Figure 1A is a schematic providing a general overview of a smoking substitute system 100. The system 100 includes a substitute smoking device 101 and an aerosol-forming article in the form of a consumable 102, which comprises an aerosol former 103. The system is configured to vaporise the aerosol former by heating the aerosol former 103 (so as to form a vapour/aerosol for inhalation by a user).

In the illustrated system, the heater 104 forms part of the consumable 102 and is configured to heat the aerosol former 103. In this variation, the heater 104 is electrically connectable to the power source 105, for example, when the consumable 102 is engaged with the device 101. Heat from the heater 104 vaporises the aerosol former 103 to produce a vapour. The vapour subsequently condenses to form an aerosol, which is ultimately inhaled by the user.

The system 100 further comprises a power source 105 that forms part of the device 101. In other embodiments the power source 105 may be external to (but connectable to) the device 101. The power source 105 is electrically connectable to the heater 104 such that it is able to supply power to the heater 104 (i.e. for the purpose of heating the aerosol former 103). Thus, control of the electrical connection of the power source 105 to the heater 104 provides control of the state of the heater 104. The power source 105 may be a power store, for example a battery or rechargeable battery (e.g. a lithium ion battery).

The system 100 further comprises an I/O module comprising a connector 106 also referred to as the device electrical terminal (e.g. in the form of a USB port, Micro USB port, USB-C port, etc.). The connector 106 is configured for connection to an external source of electrical power, e.g. a mains electrical supply outlet. The connector 106 may be used in substitution for the power source 105. That is the connector 106 may be electrically connectable to the heater 104 so as to supply electricity to the heater 104. In such embodiments, the device may not include a power source, and the power source of the system may instead comprise the connector 106 and an external source of electrical power (to which the connector 106 provides electrical connection).

In some embodiments, the connector 106 may be used to charge and recharge the power source 105 where the power source 105 includes a rechargeable battery.

The system 100 also comprises a user interface (UI) 107. Although not shown, the UI 107 may include input means to receive commands from a user. The input means of the UI 107 allows the user to control at least one aspect of the operation of the system 100. The input means may, for example, be in the form of a button, touchscreen, switch, microphone, etc.

The UI 107 also comprises output means to convey information to the user. The output means may, for example, comprise lights (e.g. LEDs), a display screen, speaker, vibration generator, etc.

The system 100 further comprises a controller 108 that is configured to control at least one function of the device 101. In the illustrated embodiment, the controller 108 is a component of the device 101, but in other embodiments may be separate from (but connectable to) the device 101. The controller 108 is configured to control the operation of the heater 104 and, for example, may be configured to control the voltage applied from the power source 105 to the heater 104. The controller 108 may be configured to toggle the supply of power to the heater 104 between an on state, in which the full output voltage of the power source 105 is applied to the heater 104, and an off state, in which the no voltage is applied to the heater 104.

Although not shown, the system 100 may also comprise a voltage regulator to regulate the output voltage from the power source 105 to form a regulated voltage. The regulated voltage may then be applied to the heater 104.

In addition to being connected to the heater 104, the controller 108 is operatively connected to the UI 107. Thus, the controller 108 may receive an input signal from the input means of the UI 107. Similarly, the controller 108 may transmit output signals to the UI 107. In response, the output means of the UI 107 may convey information, based on the output signals, to a user. The controller also comprises a memory 109, which is a non-volatile memory. The memory 109 includes instructions, which, when implemented, cause the controller to perform certain tasks or steps of a method.

Figure 1B is a schematic showing a variation of the system 100 of Figure 1A. In the system 100' of Figure 1B, the heater 104 forms part of the device 101, rather than the consumable 102. In this variation, the heater 104 is electrically connected to the power source 105.

The systems 100, 100' of Figures 1A and 1B may be implemented as one of two broad categories of system, each in accordance with the present invention: a heated tobacco (HT) system or an e-cigarette system. A description of each category of system follows.

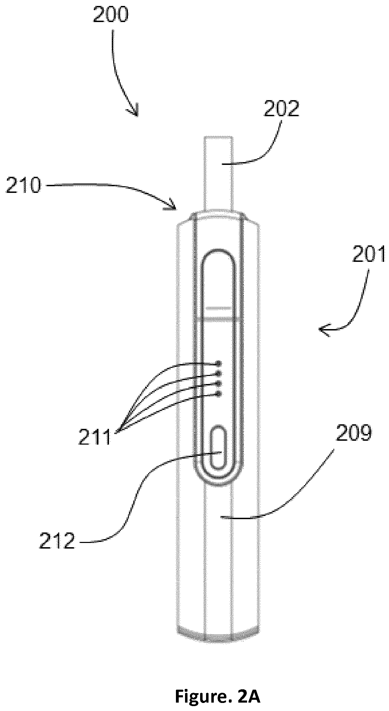

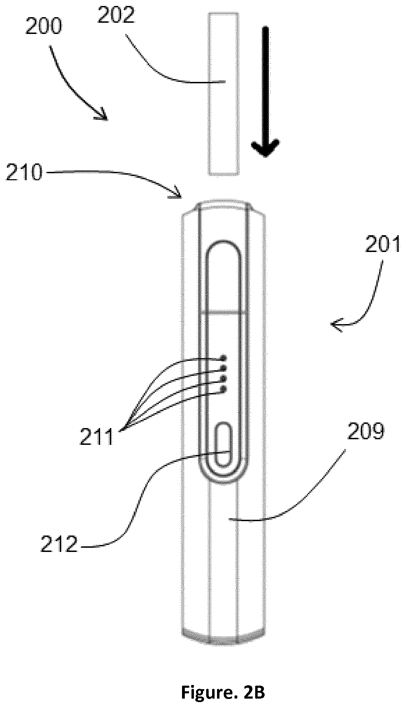

Figures 2A and 2B illustrate a heated-tobacco (HT) smoking substitute system 200. The system 200 is an example of the systems 100, 100' described in relation to Figures 1A or 1B. System 200 includes an HT device 201 and an HT consumable 202. The description of Figures 1A and 1B above is applicable to the system 200 of Figures 2A and 2B, and will thus not be repeated.

The device 201 and the consumable 202 are configured such that the consumable 202 can be engaged with the device 201. Figure 2A shows the device 201 and the consumable 202 in an engaged state, whilst Figure 2B shows the device 201 and the consumable 202 in a disengaged state.

The device 201 comprises a body 209 and cap 210. In use the cap 210 is engaged at an end of the body 209. Although not apparent from the figures, the cap 210 is moveable relative to the body 209. In particular, the cap 210 is slideable and can slide along a longitudinal axis of the body 209.

The device 201 comprises an output means (forming part of the UI of the device 201) in the form of a plurality of light-emitting diodes (LEDs) 211 arranged linearly along the longitudinal axis of the device 201 and on an outer surface of the body 209 of the device 201. A button 212 is also arranged on an outer surface of the body 209 of the device 201 and is axially spaced (i.e. along the longitudinal axis) from the plurality of LEDs 211.

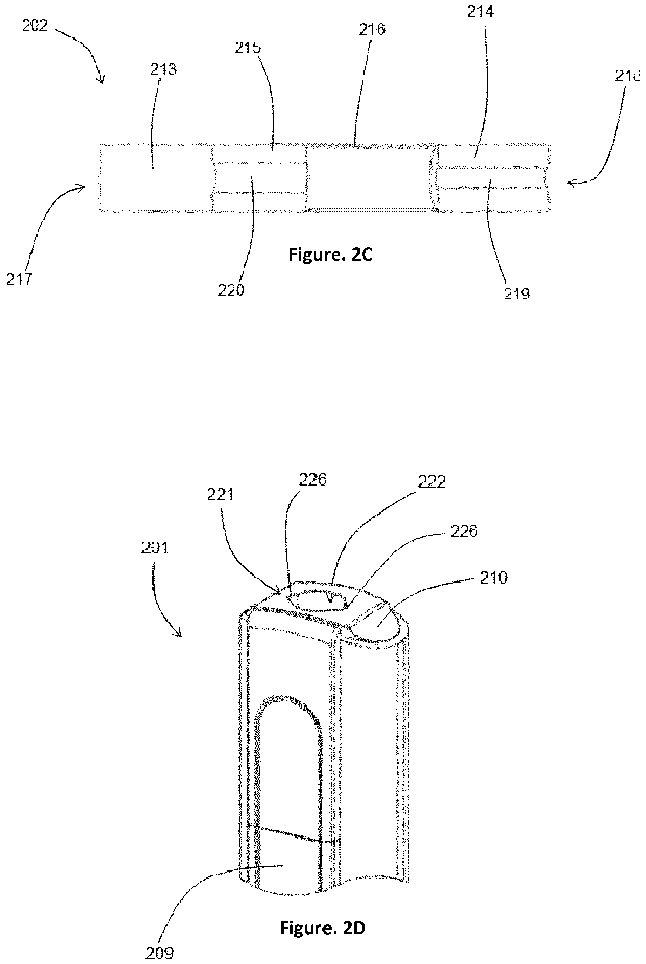

Figure 2C show a detailed section view of the consumable of 202 of the system 200. The consumable 202 generally resembles a cigarette. In that respect, the consumable 202 has a generally cylindrical form with a diameter of 7 mm and an axial length of 70 mm. The consumable 202 comprises an aerosol forming substrate 213, a terminal filter element 214, an upstream filter element 215 and a spacer element 216. In other embodiments, the consumable may further comprise a cooling element. A cooling element may exchange heat with vapour that is formed by the aerosol-forming substrate 213 in order to cool the vapour so as to facilitate condensation of the vapour.

The aerosol-forming substrate 213 is substantially cylindrical and is located at an upstream end 217 of the consumable 202, and comprises the aerosol former of the system 200. In that respect, the aerosol forming substrate 213 is configured to be heated by the device 201 to release a vapour. The released vapour is subsequently entrained in an airflow flowing through the aerosol-forming substrate 213. The airflow is produced by the action of the user drawing on a downstream 218 (i.e. terminal or mouth) end of the consumable 202.

In the present embodiment, the aerosol forming substrate 213 comprises tobacco material that may, for example, include any suitable parts of the tobacco plant (e.g. leaves, stems, roots, bark, seeds and flowers). The tobacco may comprise one or more of leaf tobacco, stem tobacco, tobacco powder, tobacco dust, tobacco derivatives, expanded tobacco, homogenised tobacco, shredded tobacco, extruded tobacco, cut rag tobacco and/or reconstituted tobacco (e.g. slurry recon or paper recon). For example, the aerosol-forming substrate 213 may comprise a gathered sheet of homogenised (e.g. paper/slurry recon) tobacco or gathered shreds/strips formed from such a sheet.

In order to generate an aerosol, the aerosol forming substrate 213 comprises at least one volatile compound that is intended to be vaporised/aerosolised and that may provide the user with a recreational and/or medicinal effect when inhaled. The aerosol-forming substrate 213 may further comprise one or more additives. For example, such additives may be in the form of humectants (e.g. propylene glycol and/or vegetable glycerine), flavourants, fillers, aqueous/non-aqueous solvents and/or binders.

The terminal filter element 214 is also substantially cylindrical, and is located downstream of the aerosol forming substrate 213 at the downstream end 218 of the consumable 202. The terminal filter element 214 is in the form of a hollow bore filter element having a bore 219 (e.g. for airflow) formed therethrough. The diameter of the bore 219 is 2 mm. The terminal filter element 214 is formed of a porous (e.g. monoacetate) filter material. As set forth above, the downstream end 218 of the consumable 202 (i.e. where the terminal filter 214 is located) forms a mouthpiece portion of the consumable 202 upon which the user draws. Airflow is drawn from the upstream end 217, thorough the components of the consumable 202, and out of the downstream end 218. The airflow is driven by the user drawing on the downstream end 218 (i.e. the mouthpiece portion) of the consumable 202.

The upstream filter element 215 is located axially adjacent to the aerosol-forming substrate 213, between the aerosol-forming substrate 213 and the terminal filter element 214. Like the terminal filter 214, the upstream filter element 215 is in the form of a hollow bore filter element, such that it has a bore 220 extending axially therethrough. In this way, the upstream filter 215 may act as an airflow restrictor. The upstream filter element 215 is formed of a porous (e.g. monoacetate) filter material. The bore 220 of the upstream filter element 215 has a larger diameter (3 mm) than the terminal filter element 214.

The spacer 216 is in the form of a cardboard tube, which defines a cavity or chamber between the upstream filter element 215 and the terminal filter element 214. The spacer 216 acts to allow both cooling and mixing of the vapour/aerosol from the aerosol-forming substrate 213. The spacer has an external diameter of 7 mm and an axial length of 14mm.

Although not apparent from the figure, the aerosol-forming substrate 213, upstream filter 215 and spacer 216 are circumscribed by a paper wrapping layer. The terminal filter 214 is circumscribed by a tipping layer that also circumscribes a portion of the paper wrapping layer (so as to connect the terminal filter 214 to the remaining components of the consumable 202). The upstream filter 215 and terminal filter 214 are circumscribed by further wrapping layers in the form of plug wraps.

Returning now to the device 201, Figure 2D illustrates a detailed view of the end of the device 201 that is configured to engage with the consumable 202. The cap 210 of the device 201 includes an opening 221 to an internal cavity 222 (more apparent from Figure 2D) defined by the cap 210. The opening 221 and the cavity 222 are formed so as to receive at least a portion of the consumable 202. During engagement of the consumable 202 with the device 201, a portion of the consumable 202 is received through the opening 221 and into the cavity 222. After engagement (see Figure 2B), the downstream end 218 of the consumable 202 protrudes from the opening 221 and thus also protrudes from the device 201. The opening 221 includes laterally disposed notches 226. When a consumable 202 is received in the opening 221, these notches 226 remain open and could, for example, be used for retaining a cover in order to cover the end of the device 201.

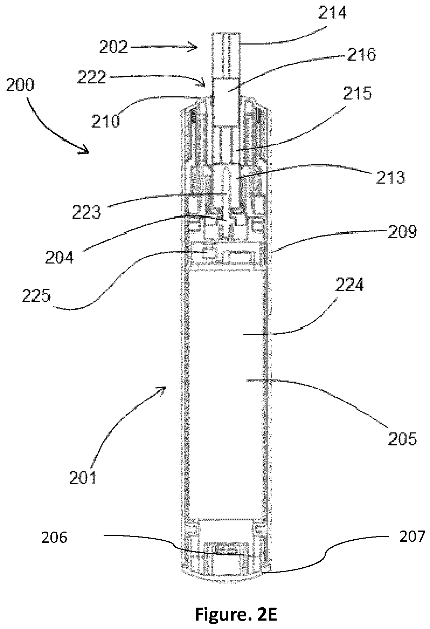

Figure 2E shows a cross section through a central longitudinal plane through the device 201. The device 201 is shown with the consumable 202 engaged therewith.

The device 201 comprises a heater 204 comprising heating element 223. The heater 204 forms part of the body 209 of the device 201 and is rigidly mounted to the body 209. In the illustrated embodiment, the heater 204 is a rod heater with a heating element 223 having a circular transverse profile. In other embodiments the heater may be in the form of a blade heater (e.g. heating element with a rectangular transverse profile) or a tube heater (e.g. heating element with a tubular form).

The heating element 223 of the heater 204 projects from an internal base of the cavity 222 along a longitudinal axis towards the opening 221. As is apparent from the figure, the length (i.e. along the longitudinal axis) of the heating element is less than a depth of the cavity 222. In this way, the heating element 223 does not protrude from or extend beyond the opening 221.

When the consumable 202 is received in the cavity 222 (as is shown in Figure 2E), the heating element 223 penetrates the aerosol-forming substrate 213 of the consumable 202. In particular, the heating element 223 extends for nearly the entire axial length of the aerosol-forming substrate 213 when inserted therein. Thus, when the heater 204 is activated, heat is transferred radially from an outer circumferential surface the heating element 223 to the aerosol-forming substrate 213.

The device 201 further comprises an electronics cavity 224. A power source, in the form of a rechargeable battery 205 (a lithium ion battery), is located in electronics cavity 224.

The device 201 includes a connector also referred to as a device electrical terminal 206 (i.e. forming part of an IO module of the device 201). The connector may be, for example, USB port, a micro-USB port or a USB-C port for examples. The USB port 206 may be used to recharge the rechargeable battery 205. In an embodiment, the device electrical terminal may be provided in an end of the body 209 which is opposite to the end for receiving the consumable 202. In some embodiments, the device electrical terminal 206 may be provided in a recess defined in the second end of the body 209, and may be optionally enclosed by a flexible member 207. In an embodiment, the flexible member 207 may be made of silicone material.

The device 201 includes a controller (not shown) located in the electronics cavity 224. The controller comprises a microcontroller mounted on a printed circuit board (PCB). The USB port 206 is also connected to the controller 208 (i.e. connected to the PCB and microcontroller).

The controller 208 is configured to control at least one function of the device 202. For example, the controller 208 is configured to control the operation of the heater 204. Such control of the operation of the heater 204 may be accomplished by the controller toggling the electrical connection of the rechargeable battery 205 to the heater 204. For example, the controller 208 is configured to control the heater 204 in response to a user depressing the button 212. Depressing the button 212 may cause the controller to allow a voltage (from the rechargeable battery 205) to be applied to the heater 204 (so as to cause the heating element 223 to be heated).

The controller is also configured to control the LEDs 211 in response to (e.g. a detected) a condition of the device 201 or the consumable 202. For example, the controller may control the LEDs to indicate whether the device 201 is in an on state or an off state (e.g. one or more of the LEDs may be illuminated by the controller when the device is in an on state).

The device 201 comprises a further input means (i.e. in addition to the button 212) in the form of a puff sensor 225. The puff sensor 225 is configured to detect a user drawing (i.e. inhaling) at the downstream end 218 of the consumable 202. The puff sensor 225 may, for example, be in the form of a pressure sensor, flowmeter or a microphone. The puff sensor 225 is operatively connected to the controller 208 in the electronics cavity 224, such that a signal from the puff sensor 225, indicative of a puff state (i.e. drawing or not drawing), forms an input to the controller 208 (and can thus be responded to by the controller 208).

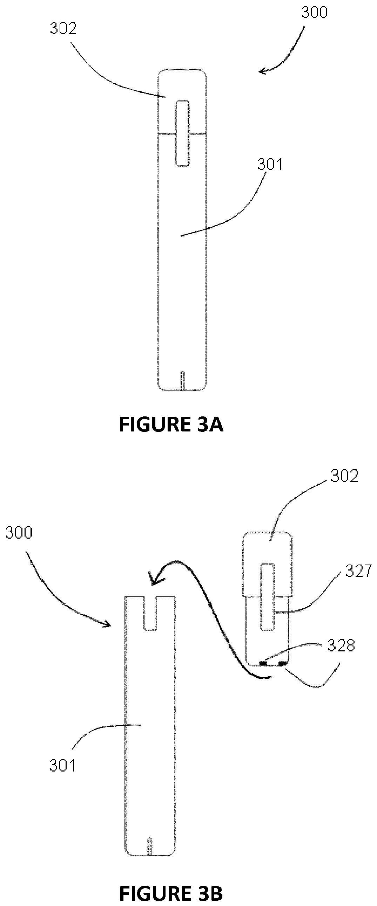

Figures 3A and 3B illustrate an e-cigarette smoking substitute system 300. The system 300 is an example of the systems 100, 100' of Figures 1A and 1B and comprises an e-cigarette device 301 and an e-cigarette consumable 302. The description of Figures 1A and 1B above is applicable to the system of Figures 3A and 3B, and will not be repeated.

The device 301 and the consumable 302 are configured such that the consumable 302 can be engaged with the device 301. Figure 3A shows the device 301 and the consumable 302 in an engaged state, whilst Figure 3B shows the device 301 and the consumable 302 in a disengaged state. During engagement a portion of the consumable 302 is received in a cavity 322 of the device 301. The consumable 302 is retained in the device 301 via an interference fit (although in other embodiments, the device and consumable could be engaged by screwing one onto (or onto) the other, through a bayonet fitting, or by way of a snap engagement mechanism).

The consumable 302 includes a tank 327. The tank 327 defines a reservoir for the storage of an aerosol-former, which in this embodiment, is in the form of e-liquid.

In this present embodiment, the consumable 302 is a "single-use" consumable. That is, upon exhausting the e-liquid in the tank 327, the intention is that the user disposes of the whole consumable 302. In other embodiments, the e-liquid (i.e. aerosol former) may be the only part of the system that is truly "single-use". In such embodiments, the tank may be refillable with e-liquid or the e-liquid may be stored in a non-consumable component of the system. For example, the e-liquid may be stored in a tank located in the device or stored in another component that is itself not single-use (e.g. a refillable cartomizer).

In the illustrated system 300, a heater 304 is located in the consumable 302 and is configured to heat and vaporise the e-liquid (stored in the tank 327). Although not shown, the heater 304 comprises a porous wick and a resistive heating element. The porous wick conveys e-liquid from the tank 327 to the heating element. The heating element is a heating filament that is helically wound around a portion of the porous wick, such that when the heating element is heated (e.g. by the action of electrical current passing through the heating element), heat is transferred from the heating element to the e-liquid conveyed by the wick. This transfer of heat vaporises the e-liquid and the resultant vapour is entrained in an airflow passing through the consumable 302 (i.e. driven by a user drawing on a downstream end 318 of the consumable 302). Between the vaporisation point at the coil and the downstream end 318 (i.e. the mouth end), the vapour condenses into an aerosol, and is subsequently inhaled by the user.

Like the previously described embodiment, the device 301 comprises a power source in the form of a rechargeable battery (not shown) and a connector in the form of a USB port (not shown). The device 301 further comprises controller (also not shown). The rechargeable battery, connector and controller are similar (and operate in a similar manner) to the corresponding components of the embodiment described above with respect to Figure 1A to 1E.

The consumable 302 includes a pair of heater electrical contacts 328 disposed on a device-facing end surface of the consumable 302. The heater electrical contacts 328 are electrically connected to the heater 304 in the consumable 302, such that a voltage applied across the heater electrical contacts 328 generally corresponds to a voltage applied across the resistive heating element of the heater 304.

When the consumable 302 is engaged with the device 301, the heater electrical contacts 328 are brought into electrical contact with corresponding device electrical contacts (not shown) on the device 301. The device electrical contacts are electrically connected (directly or indirectly) to the rechargeable battery. The controller may thus be configured to control the voltage applied across the device electrical contacts from the rechargeable battery. By controlling the voltage applied across the device electrical contacts, the voltage applied to the heater 304 is correspondingly controlled.

The device 301 includes an output means (forming part of the UI of the system 300) in the form of a single light-emitting diode ("LED") 311. The LED 311 is operatively connected to the controller, such that controller can control the illumination of the LED 311. The controller is configured to illuminate the LED when then the heater 304 is active.

The device 301 also includes an input means in the form of a puff sensor (not shown). The puff sensor is the same as that described above with respect to the embodiment shown in Figure 1A to 1E.

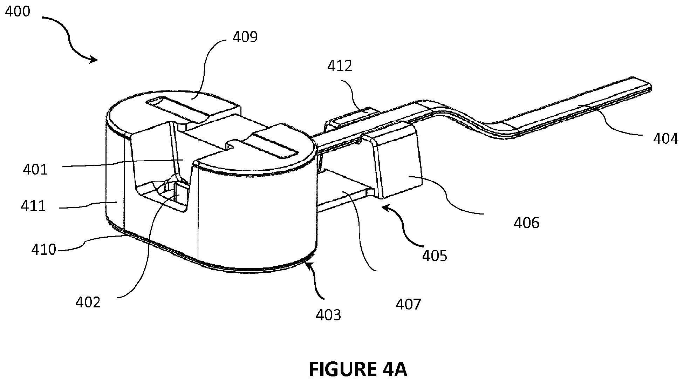

Referring to Figures 4A which illustrate a dock 400 for a HNB device 201. The dock 400 is used for charging the power source 105 (shown Figure. 1a) of the HNB device 201. The dock 400 is be configured to rigidly support the HNB device 201 (shown in Figure. 2a) while the HNB device has been docked for charging. This may prevent any accidental disconnection between the charging terminals. The dock 400 comprises a housing 403, a cavity 401 defined in the housing, and a dock electrical terminal 402 disposed in the cavity 401. The cavity 401 is defined in the housing 403 of the dock 400, such that the cavity 401 extends from the first lateral surface 409 laterally and longitudinally towards the second lateral surface 410. Further, the cavity 401 defines an opening in the housing body 411 for receiving the HNB device 201. In an embodiment, the extension of the cavity 401 is selected based on the requirement. Further, the cavity 401 is shaped in conformity to the shape of the body 209 of the HNB device 201. The dock 400 further includes a charging connection 404 (i.e. charging cable) configured to connect the dock electrical terminal 402, with a charging source [not shown in figures]. The housing 403 may be of any shape and includes a housing body 411 longitudinally extending between a first lateral surface 409 and a second lateral surface 410. In an embodiment, the second lateral surface 410 form a base of the dock 400. The HNB device 201 is received through the first lateral surface 409, and accommodated in the cavity 401.

Further, referring to figure 4A, the dock 400 comprises a closure 405, which may be configured to close the cavity 401, when the HNB device 201 is not accommodated within the cavity 401. The closure comprises a head portion 406, and a stem portion 407 extending from the head portion 406. The stem portion 407 of the closure 405 is hingedly attached to the housing body 411 of the dock 400. This hinged connection of the stem portion 407 of the closure 405, facilitates in pivotal movement of the closure 405 between a first position and a second position. In some embodiments, the shape of the head portion 406 of the closure 405 is configured to correspond to the shape of the cavity 401 defined in the dock 400. In an illustrated embodiment, the head portion 406 of the closure 405 is defined with a groove 412, to support at least one cable 404 for the dock 400, during charging of the HNB device 201. In some embodiments, the groove 412 may be configured to support more than one cables. This supporting of the cable 404 facilitates in mitigating the cable 404 from wobbling, and thus facilitates in maintaining stability of the dock 400 during charging of the device 201.

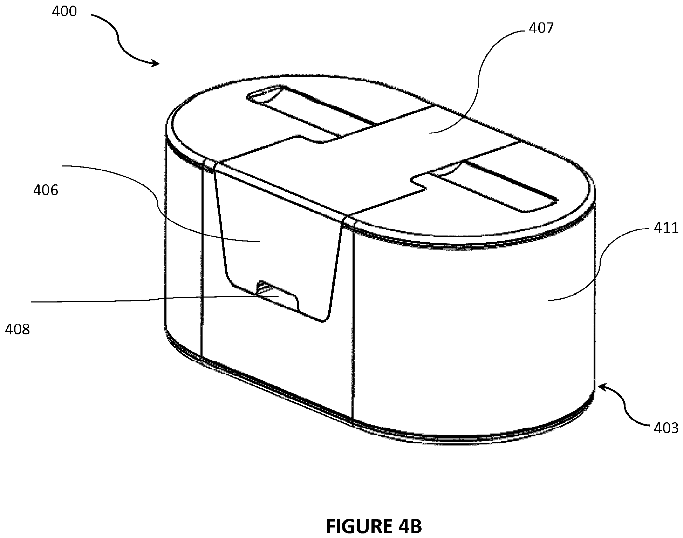

Figure 4B illustrates the dock 400 for a HNB device 201, with the closure 405 in the first position. As apparent in the Figure 4B, the first position of the closure 405 corresponds to substantially engagement of the closure 405 with the cavity 401. The closure 405 is configured to substantially fill the cavity 401 in the first position i.e. the head portion 406 of the closure 405 is configured to completely fill or accommodate the cavity 401 of the dock 400, and thus closing or covering the cavity 401 of the dock 400. Covering the cavity 401 results in covering the dock electrical terminal 402 in the cavity 401, which may prevent the dock electrical terminal 402 from damage due to deposition of foreign materials such as dust, debris, fluids and the like. In some embodiments, the closure 405 is made of an elastic material such as silicone. The elastic material mitigates the chances of damage to the dock electrical terminal 402, upon engagement of the closure 405 in the cavity 401.

In the illustrated embodiment, the device electrical terminal 206 and the dock electrical terminal 402 may be connected through at least one of universal serial bus (USB) connector, and USB lightning. As an example, the USB connector may be a USB C-connector to establish electrical connection between the dock electrical terminal 402 and the device electrical terminal 206 for charging of the HNB device 201.

In an optional embodiment, the dock 400 may include a sealing member (not shown in figures) between the housing body 411 and the first and second lateral surfaces 409 and 410. The sealing member may be made of any polymeric material and is configured to prevent entry of foreign particles into the housing body 411.

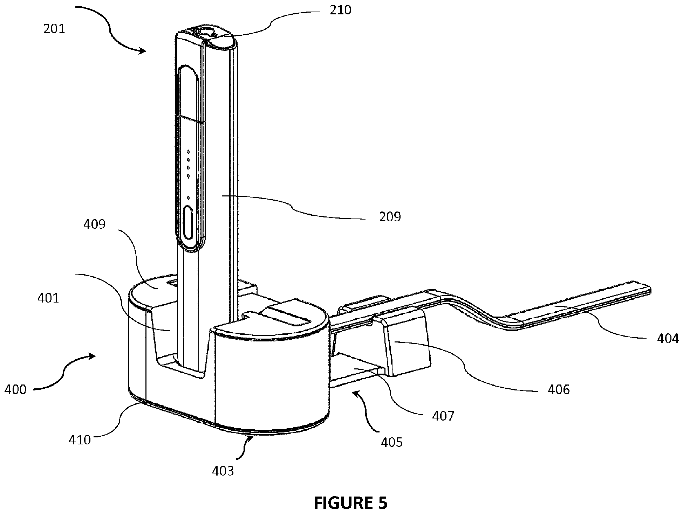

Now referring to Figures 5 illustrating schematic of the dock 400 receiving the HNB device 201. As explained above, the HNB device 201 includes a body 209 and a cap 210. The HNB device 201 includes a first end for receiving a HNB consumable 202 and a second end accommodating a device electrical terminal 206 [shown in Figure. 2E]. In the illustrated embodiment, the HNB device 201 is positioned in the cavity 401, upon disengagement of the head portion 406 (thus, the closure), from the cavity 401 i.e. moving the head portion 406 from the first position to the second position. The head portion 406 of the closure 405 is defined with a provision for engaging and disengaging the closure 405 with the cavity 401. In an illustrated embodiment, the provision 408 (as seen in figure. 4A) defined in the head portion 306 is a recess, which may facilitate in engaging and disengaging (i.e. pivoting the closure between the first position and the second position) of the head portion 406 of the closure 405 from the cavity 401 of the dock 400. In some embodiments, the head portion 406 may be defined with an emboss, which may facilitate in engaging and disengaging of the head portion 406 of the closure 405 with the cavity 401 of the dock 400. In an embodiment, the recess 408 or the emboss (not shown in figures), defined in the head portion 406 of the closure 405 provides additional surface area for gripping by the user, which may facilitate in easy disengagement of the closure 405 from the cavity 401 i.e. movement of the closure 405 from the first position and the second position. The device electrical terminal 206 is configured to engage with the dock electrical terminal 402 in the dock 400 to establish the electrical connection for charging the HNB device 201. The dock 400 includes the cavity 401 and the dock electrical terminal 402 is disposed in the cavity 401. The cavity 401 receives the second end of the HNB device 201 and rigidly supports the HNB device 201 on the dock 400 for charging. In an embodiment, as shown in Figure 4A, the dock electrical terminal 402 is fixed in the longitudinal axis of the dock 400, such that, the second end of the HNB device 201 is received by the cavity 401 along the longitudinal axis of the dock 400 to establish the electrical connection, and rigidly hold the device 201 for charging. The longitudinal axis may be a vertical axis perpendicular to the first and second lateral surfaces 409, 410.

As apparent from Figure. 5, during charging of the HNB device 201, the closure 405 is in the second position i.e. the head portion 406 of the closure 405 disengaged from the cavity 401 of the dock 400. The cable 404 extending from the dock electrical connection 402 in the cavity 401, is received and supported by the groove 412 defined in the head portion 406 of the closure 405. The groove 412 receiving and supporting the cable 404 is configured such that the groove 412 is at a distance, ranging from about 6cm to 12cm, preferable 8cm to 10cm, so that the groove 412 supports the cable 404 without any wobbling, thus may facilitate in maintaining the stability of the dock 400, during charging of the HNB device 201. In some embodiments, the closure 405 in the second position, may reside on a work place (e.g. table or any surface on which the dock 400 is placed, for charging the HNB device 201. In an embodiment, a surface of the closure 405, i.e. the surface of the head portion 406 and the stem portion 407, is defined with a gripping layer, which may facilitate in gripping the closure 405 with respect to the surface (i.e. work place), when the closure 405 is in the second position. As an example, the gripping surface may be a tactile finish, which may facilitate in preventing slipping of the closure 405, in the second position.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A dock for a smoking substitute device, comprising:
a cavity for receiving the smoking substitute device; and
a closure configured to close the cavity and to support a cable for the dock.

2. The dock according to claim 1, wherein the smoking substitute device is a Heat Not Burn (HNB) device.

3. The dock according to claim 1 or claim 2, wherein the closure is hingedly attached to the dock.

4. The dock according to claim 3, wherein the closure is configured to pivot between a first position and a second position, wherein in the first position the closure closes the cavity and in the second position the closure is removed from the cavity and supports the cable.

5. The dock according to any one of the preceding claims, wherein the closure is configured to fill the cavity as it closes the cavity.

6. The dock according to any one of the preceding claims, wherein the closure closes the cavity by one of more of interference fit or a snap fit engagement.

7. The dock according to any one of the preceding claims, wherein the closure comprises a groove for receiving and supporting the one cable.

8. The dock according to claim 7, wherein the groove is arranged to separate from the electrical terminal at a distance ranging from 6 cm to 12 cm.

9. The dock according to any one of the preceding claims, wherein the closure comprises a grip for removing the closure from the cavity.

10. The dock according to any of the preceding claims, the closure is formed from an elastic material.

11. The dock according to any of the preceding claims, wherein the cavity comprises a dock electrical terminal for forming an electrical connection with a device electrical terminal on the smoking substitute device when said smoking substitute device is received in the cavity.

12. The dock according to any of the preceding claims, further comprises a base, wherein the base comprises a non-slip coating.

13. A smoking substitute system, comprising:
the dock according any one of the claims 1 to 12; and
a smoking substitute device configured to be received in the cavity of the dock.

14. The smoking substitute system according to claim 13, wherein the smoking substitute device further comprises a device electrical terminal; wherein said device electrical terminal is configured to form an electrical connection with a dock electrical terminal at the dock when said smoking substitute device is received in the cavity.

15. The smoking substitute system according to claim 14, comprises an aerosol-forming article for use with the smoking substitute device.
